# EUROPÄISCHE PATENTSCHRIFT

(11) **EP 2 207 497 B1**
(45) Veröffentlichungstag und Bekanntmachung des Hinweises auf die Patenterteilung: **30.08.2017**
(21) Anmeldenummer: 08804270.0
(22) Anmeldetag: 16.09.2008
(51) Int. Cl.: A61C 8/00

(54) **VERBINDUNGSANORDNUNG ZWISCHEN EINEM DENTALIMPLANTAT UND EINEM ABUTMENT**
CONNECTING ASSEMBLY BETWEEN A DENTAL IMPLANT AND AN ABUTMENT
AGENCEMENT POUR CONNECTER UN IMPLANT DENTAIRE ET UNE BUTÉE

(30) Priorität: 17.09.2007 EP 07116564
(43) Veröffentlichungstag der Anmeldung: 21.07.2010
(73) Patentinhaber: Straumann Holding AG, 4002 Basel (CH)
(72) Erfinder: STUDER, Roger, 4102 Binningen (CH); EGLI, David, 4053 Basel (CH); MUNDWILER, Ulrich, 4456 Tenniken (CH)
(74) Vertreter: Modiano, Micaela Nadia
(86) Internationale Anmeldenummer: PCT/EP2008/062312
(87) Internationale Veröffentlichungsnummer: WO 2009/037260

(56) Entgegenhaltungen:
- EP-A- 1 362 560
- WO-A-00/09031
- WO-A-00/47113
- WO-A-00/62704
- WO-A-97/14371
- WO-A-99/16293
- WO-A-2004/032786
- DE-U1- 9 202 656
- KR-B1- 100 665 046
- US-A- 5 209 666
- US-A- 5 571 016
- US-A- 5 660 545
- US-A- 5 733 122
- US-A1- 2001 053 512
- US-A1- 2003 224 330
- US-B1- 6 743 018

## Beschreibung

### Anwendungsgebiet der Erfindung

Die vorliegende Erfindung betrifft eine Verbindungsanordnung zwischen einem Dentalimplantat und einem Abutment, im Besonderen für Schrauben- oder zylinderförmige Dentalimplantate. Eine derartige Verbindungsanordnung umfasst ein hinreichend bekanntes, in den Kieferknochen eines Patienten einsetzbares Dentalimplantat und ein darauf zu fixierendes Abutment. Die Verbindungsanordnung wird dabei in eine zylindrische Öffnung am okklusalen Teil des Dentalimplantats eingesetzt. Zur reproduzierbaren Positionierung des Abutments und zur Rotationssicherung kann in der Aufnahmebohrung eine nicht-rotationssymmetrische Aufnahmekontur vorgesehen sein, zu welcher an der Wurzelpartie des Abutments eine korrespondierende, nicht-rotationssymmetrische äussere Gegenkontur vorhanden ist. Im Inneren eines Dentalimplantats erstreckt sich ein Innengewinde, das durch Eindrehen einer in einem Abutment axial festgehaltenen Schraube, auch Basisschraube genannt, in das Innengewinde des Dentalimplantats diese miteinander fixiert. Nach der Verschraubung mit dem Dentalimplantat liegt die Schraube dabei mit einem konischen Schaftbereich formschlüssig an der inneren Oberfläche des apikalen Bereichs des Abutment an. Der Schaftbereich ragt dabei aus dem Abutment heraus und der Gewindeschaft ist mit dem Gewinde des Dentalimplantats in Eingriff. Die Schraube sichert so das Abutment axial auf dem Dentalimplantat und die nicht-rotationssymmetrische Kontur dient als Rotationssicherung.

### Stand der Technik

US 5 209 666 offenbart eine Verbindungsanordnung zwischen einem Dentalimplantat und einem Abutment umfassend ein mit einer ersten koronalen Öffnung und einer zweiten apikalen Öffnung bereitgestelltes Abutment, eine Schraube und einen Ring, wobei der Ring zum Festhalten einer im Abutment eingesetzten Schraube geeignet ist, wobei der Ring in der ersten Öffnung des Abutments an einer von der Schraube koronal darüberliegenden und entfernten Position verschweißt wird, so dass im Innenbereich des Abutments ein Hohlraum ausgebildet ist, der vor der Verbindung mit dem Implantat ein Spiel der Schraube zulässt.

KR100665046 offenbart eine Verbindungsanordnung zwischen einem Dentalimplantat und einem Abutment umfassend ein mit einer ersten koronalen Öffnung und einer zweiten apikalen Öffnung bereitgestelltes Abutment, eine Schraube und einen Ring, wobei der Ring zum Festhalten einer im Abutment eingesetzten Schraube geeignet ist, wobei der Ring in der ersten Öffnung des Abutments mittels Pressspannung eingebracht wird und in einer Rille in der ersten Öffnung des Abutments formschlüssig fixiert wird.

Aus der WO 99/16293 ist eine Verbindungsanordnung zwischen einem Dentalimplantat und einem Abutment mit einer darin befindlichen Schraube, die von einem Stützring gehalten wird, bekannt, wobei der Stützring am apikalen Ende des Abutments in einem Haltebereich kraft- und formschlüssig gesichert ist. Auch wäre die Verwendung eines geklemmten mit Schlitzen versehenen Stützrings und/oder eines ebenfalls im apikalen Bereich geschlitzten Abutments denkbar.

Die vormontierte Schraube ist dabei von unten in eine Bohrung im Abutment eingeführt und ist gegen Herausfallen aus dem Abutment von dem Stützring gesichert. Darüber hinaus ist es erforderlich, den Stützring im Haltebereich am Abutment derart zu sichern, dass ein Aufbrechen oder Druchbrechen des Stützrings bei hoher Belastung verhindert wird. Es hat sich in der Praxis erwiesen, dass sich die so vormontierte Schraube in einem derartigen Fall unter sehr hoher Belastung vom Abutment lösen kann und die feste Verbindung des Dentalimplantats mit dem Abutment nicht mehr gewährleistet ist. Dies kann durch Materialermüdung hervorgerufen werden, da die Verbindungsanordnung starken Zugspannungen ausgesetzt ist. Eine erste Zugspannung entsteht bei der Montage der Verbindungsanordnung mit dem Dentalimplantat, wobei diese Zugspannung im Bereich der Schraubenauflage entsteht. Beim Einsetzen eines Dentalaufbaus, z. B. einer Krone oder Brücke, entsteht eine zweite Zugspannung durch das Eindrehen der Okklusalschraube in das Abutment-Gewinde. Die Belastung, die auf den die Schraubenauflage bildenden Stützring ausgeübt wird, ist dabei die Summe der ersten und zweiten Zugspannung, wobei in der Regel die erste Zugspannung größer ist als die zweite Zugspannung. Diese Krafteinwirkung im Bereich der Übergangsstelle von Stützring und sich darauf abstützenden Schraubenkopf kann dann zu einer Materialermüdung und/oder zum Bruch des Stützringes führen.

Es ist daher die Aufgabe der vorliegenden Erfindung eine Lösung zu finden, die höhere Zugspannungen im Haltebereich der Basisschraube standhält, eine höhere Lebensdauer aufweist, extrem hohe mechanische Festigkeit besitzt und ohne erhöhten Kostenaufwand hergestellt werden kann.

Im Rahmen der obigen Aufgabe der Erfindung besteht eine weitere Aufgabe in der Bereitstellung einer Stützringes, an dem die Zugkraft reduziert wird und das Risiko des Durchbrechens desselben minimiert wird.

### Zusammenfassung der Erfindung

Die obigen Aufgaben werden durch eine Verbindungsanordnung gemäß den Hauptanspruch 1 gelöst. Weitere vorteilhafte Ausgestaltungen der Erfindung werden in den Unteransprüchen ausgeführt.

Im Abutment ist eine erste Öffnung vorhanden, die axial ausgebildet ist. Eine Schraube wird dann durch diese erste Öffnung in den Innenbereich eines Abutments eingeführt. Eine zweite Öffnung im Abutment dient zur Hindurchführung des Schraubenschafts und des Gewindeschafts, wobei die zweite Öffnung einen geringeren Durchmesser als die erste Öffnung hat und einen konischen Bereich hat. Der geringere Durchmesser der zweiten Öffnung bewirkt, dass die eingeführte Schraube nicht aus dem Abutment herausgleiten kann, wobei der Schraubenschaft einen Bereich aufweist der konisch ausgebildet ist und an einer korrespondierenden konischen Innenfläche des Abutments zum Anliegen kommt. Dann wird ein Ring in den koronalen Bereich des Abutments eingesetzt und fixiert. Die Fixierung kann kraft-, form- oder stoffschlüssig ausgeführt sein. Als besonders vorteilhaft hat sich dabei das Einpressen des Rings in die erste Öffnung des Abutments herausgestellt. Zur Fixierung des Rings im Abutment sind auch gute Ergebnisse mittels Schnappen, Verschrauben, Bördeln, Rollen und Schweissen zu erzielen. Desweiteren kann, im Besonderen bei einer Schnappverbindung, entweder der Ring mit einem vertikalen Schlitz oder einem oder mehreren Dehnungsschlitzen ausgestattet sein, damit er sich beim Einsetzen in die erste Öffnung des Abutments plastisch verformen kann und nach dem Loslassen fonnschlüssig an der Innenfläche des Abutments anliegt. Zur Erhöhung der Presswirkung kann die äussere Oberfläche des Rings auch mit einer Rauhstruktur versehen werden, so dass sich beim Einpressen des Rings eine größere Oberfläche an der Innenfläche der koronalen Abutmentöffnung verkeilen kann. Alternativ kann vorteilhaft auch die Oberfläche des Abutments, oder auch beide Oberflächen, die des Rings und die der korrespondierenden Oberfläche des Abutments, aufgerauht sein. Alternativ kann der Ring mit einem Außengewinde ausgestattet werden, das mit einem entsprechenden Gewinde in der ersten Öffnung verschraubt ist.

Der Ring ist derart gefertigt, dass er von beiden Seiten in die Abutmentöffnung eingesetzt werden kann, auf diese Weise vereinfacht sich die Herstellung und bei der Montage braucht nicht auf die Einsetzrichtung geachtet werden. In einer weiteren Ausführungsform ist der obere Abutmentrand umgeformt, z. B. durch eine Bördelung, um den Sitz des Rings im Abutment zusätzlich zu festigen, anstatt Bördeln kann der Rand auch gerollt werden. In einer weiteren Ausführungsform kann der Ring auch mittels einer Schnappverbindung formschlüssig im Abutment fixiert sein. Hier kann entweder der Ring mit einem Schnapper versehen sein, der in einen komplementär ausgebildeten Hinterstich in der Abutmentöffnung eingreift, oder auch dass der Schnapper im Abutment mit komplementär ausgebildetem Hinterstich im Ring ausgebildet ist. Desweiteren kann der Ring auch mit dem Abutment in der Öffnung stoffschlüssig verschweißt werden. Dabei haben sich das Laserschweißverfahren und das Ultraschailscllweißverfahren als besonders vorteilhaft erwiesen. Diese Schweißverfahren zeichnen sich durch hohe Schweißgeschwindigkeit, erzielen einer schmalen und schlanker Schweißnaht und geringen thermischen Verzug aus, was den hohen Genauigkeitsansprüchen in der Dentaltechnik gerecht wird.

In einer besonderen Ausgestaltung weist der Ring sowohl ein Innengewinde als auch ein Außengewinde auf, so dass man den Ring zum Einsetzen in die Öffnung des Abutments einschrauben muss. Das Zusammensetzen der Verbindungsanordnung aus Abutment mit darin eingeschlossener Schraube, welche durch den koronal angeordneten Ring nicht herausfallen kann, und Dentalimplantat geschieht folgendermaßen. Das Abutment wird mit dem Gewindeschaft der Schraube in die Öffnung des Dentalimplantats eingeführt, so dass der Gewindeschaft in den Bereich der Öffnung des Dentalimplantats hineinreicht. Das Abutment ist auf der Außenfläche mit Konturen versehen, die zur Rotationssicherung dienen. Diese Konturen greifen sowohl beim Aufsetzen mit einer komplementären Struktur am Kronenaufbau und mit einer komplementären Struktur am Dentalimplantat ein. In einem zentralen Innenbereich des Abutments ist ein Hohlraum ausgebildet, der ein gewisses Spiel der Schraube zulässt. Das Spiel ist dabei von der Unterkante des Rings und dem Anliegen des konischen Schraubenbereichs bestimmt und ermöglicht vorteilhaft das Einschrauben der Schraube in ein Dentalimplantat ohne zu Verkanten. Die Schraube wird nach Einsatz der Verbindungsanordnung durch die axiale Öffnung mit einem speziellen Schraubendreher im Dentalimplantat verschraubt. Dabei zieht sich das Abutment mehr und mehr in das Dentalimplantat, solange bis der konisch ausgeführte Schraubenschaft an der unteren, dem Dentalimplantat zugewandten Seite, Abutmentinnenfläche angedrückt ist, so dass eine Kontaktfläche entsteht, die die auftretenden Kräfte der Zugspannung von Schraube und Dentalimplantat aufnimmt.

### Kurzbeschreibung der Figuren

Weitere Merlanale und Vorteile der vorliegenden Erfindung sowie die Wirkungsweise der exemplarischen Ausführungsform der vorliegenden Erfindung werden unten mit Bezug auf die begleitenden Zeichnungen beschrieben. Die begleitenden Zeichnungen veranschaulichen die vorliegende Erfindung und dienen zusammen mit der Beschreibung weiterhin dazu, die Grundsätze der Erfindung zu erklären und es einem Fachmann auf dem betreffenden Gebiet zu ermöglichen, die Erfindung herzustellen und zu verwenden.
Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen.

Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt. Dabei zeigen:
Fig. 1A eine Perspektivansicht einer Verbindungsanordnung zwischen einem Dentalimplantat und Abutment gemäß einer ersten Ausführungsform der Erfindung;
Fig. 1B eine Draufsicht einer Verbindungsanordnung zwischen einem Dentalimplantat und Abutment gemäß Fig. 1A;
Fig. 1C eine Seitenansicht im Teilschnitt der Schnittlinie A-A von Fig. 1B;
Fig. 2A eine Perspektivansicht einer Verbindungsanordnung zwischen einem Dentalimplantat und Abutment gemäß einer zweiten Ausführungsform der Erfindung;
Fig. 2B eine Draufsicht einer Verbindungsanordnung zwischen einem Dentalimplantat und Abutment gemäß Fig. 2A;
Fig. 2C eine Seitenansicht im Teilschnitt der Schnittlinie A-A von Fig. 2B;
Fig. 3A eine Perspektivansicht einer Verbindungsanordnung zwischen einem Dentalimplantat und Abutment gemäß einer dritten Ausführungsform der Erfindung;
Fig. 3B eine Draufsicht einer Verbindungsanordnung zwischen einem Dentalimplantat und Abutment gemäß Fig. 3A;

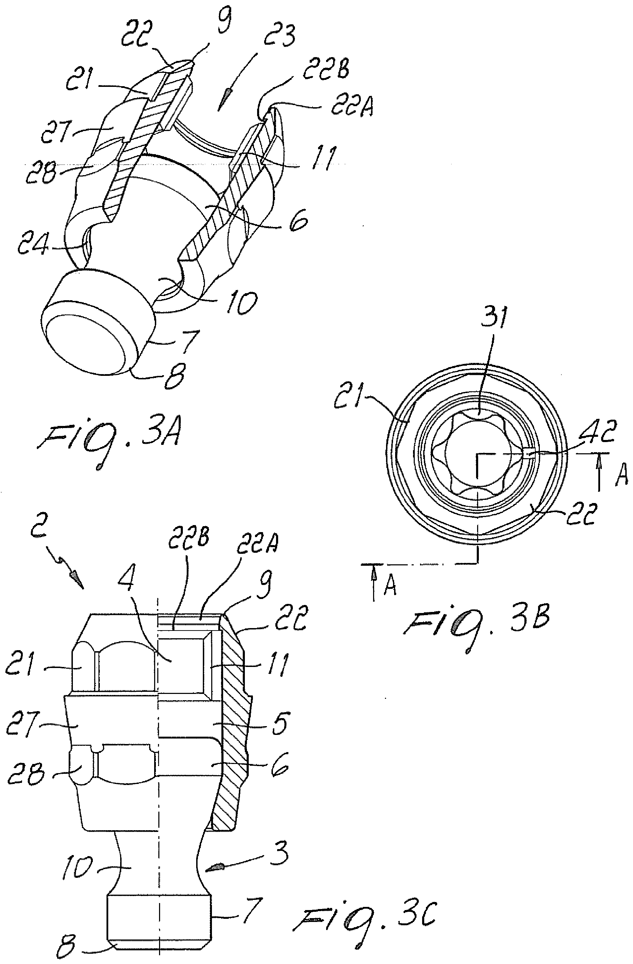

Fig. 3A eine Seitenansicht im Teilschnitt der Schnittlinie A-A von Fig. 3B;

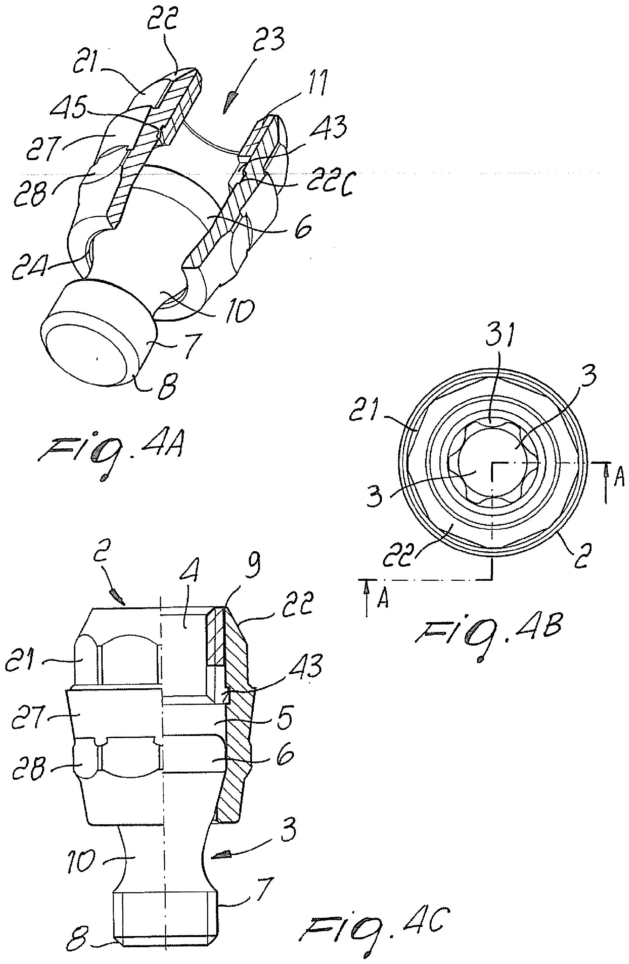

Fig. 4A eine Perspektivansicht einer Verbindungsanordnung zwischen einem Dentalimplantat und Abutment gemäß einer vierten Ausführungsform der Erfindung;
Fig. 4B eine Draufsicht einer Verbindungsanordnung zwischen einem Dentalimplantat und Abutment gemäß Fig. 4A;
Fig. 4A eine Seitenansicht im Teilschnitt der Schnittlinie A-A von Fig. 4B;

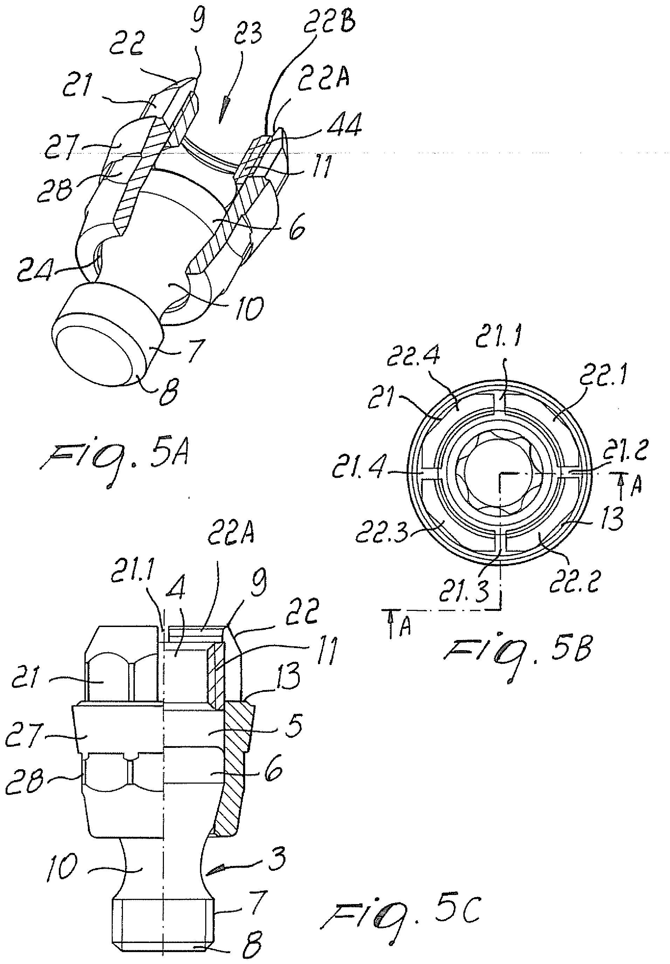

Fig. 5C eine Perspektivansicht einer Verbindungsanordnung zwischen einem Dentalimplantat und Abutment gemäß einer fünften Ausführungsform der Erfindung;
Fig. 5B eine Draufsicht einer Verbindungsanordnung zwischen einem Dentalimplantat und Abutment gemäß Fig. 5A;
Fig. 5A eine Seitenansicht im Teilschnitt der Schnittlinie A-A von Fig. 5B;

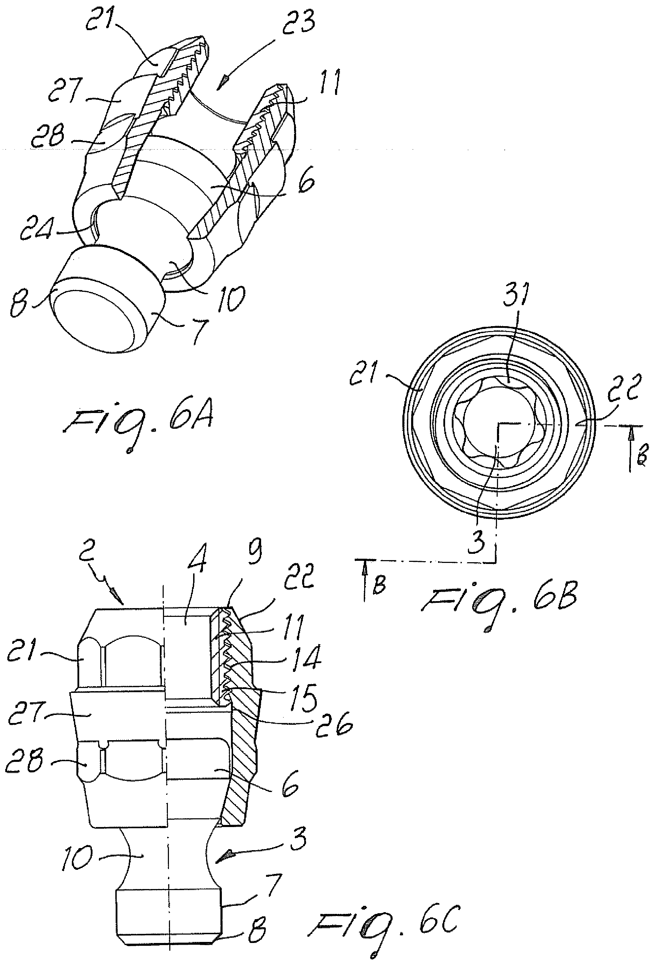

Fig. 6C eine Perspektivansicht einer Verbindungsanordnung zwischen einem Dentalimplantat und Abutment gemäß einer sechsten Ausführungsform der Erfindung;
Fig. 6B eine Draufsicht einer Verbindungsanordnung zwischen einem Dentalimplantat und Abutment gemäß Fig. 6A;
Fig. 6C eine Seitenansicht im Teilschnitt der Schnittlinie B-B von Fig. 6B;

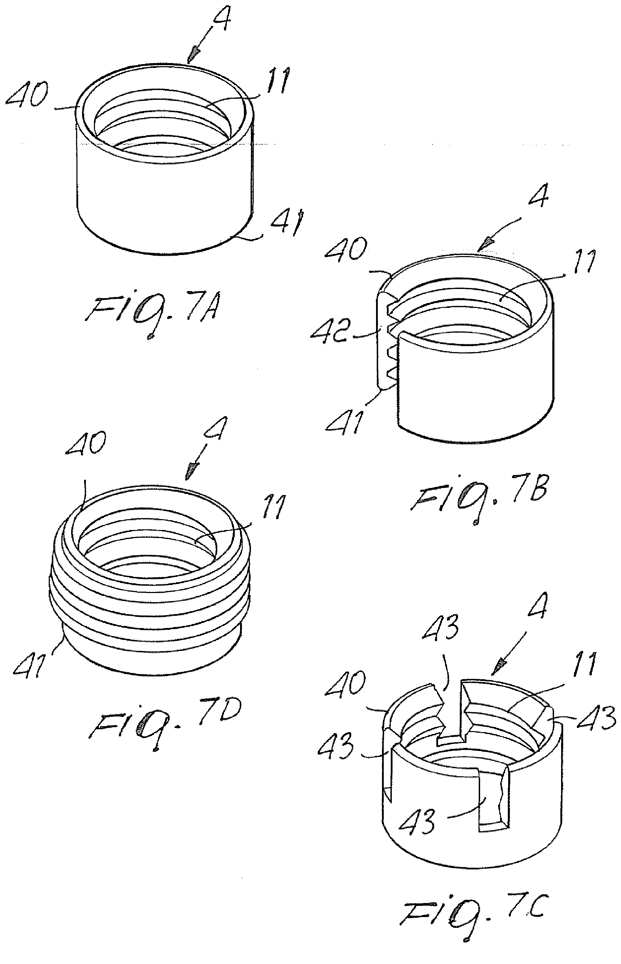

Fig. 7A eine Perspektivansicht eines Rings in geschlossener Ausführung;
Fig. 7B eine Perspektivansicht eines Rings mit einem Vertikalschlitz;
Fig. 7C eine Perspektivansicht eines Rings mit mehreren Dehnungsschlitzen;
Fig. 7D eine Perspektivansicht eines Rings mit Innen- und Außengewinde;

### Beschreibung der bevorzugten Ausführungsformen der Erfindung

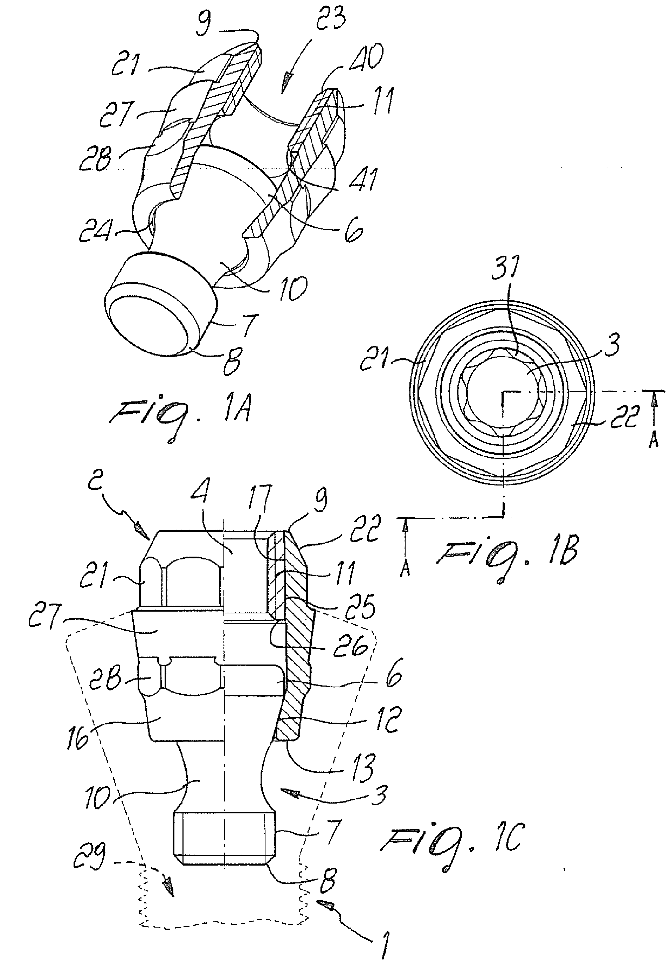

Anhand der nachfolgenden Figuren 1A bis 7C werden gegenwärtig bevorzugte Ausführungsformen der vorliegenden Erfindung einer Verbindungsanordnung zwischen einem Dentalimplantat und einem Abutment mit einem mit einer ersten und einer zweiten Öffnung bereitgestellten Abutment, einer Schraube und einem Ring, wobei der Ring zum Festhalten einer im Abutment eingesetzten Schraube geeignet ist, beschrieben.

Figuren 1A-1C zeigen eine Verbindungsanordnung zwischen einem Dentalimplantat 1 und einem Abutment 2, mit einer im Abutment 2 festgehaltenen Schraube 3 (auch Basisschraube genannt) in verschiedenen Ansichten gemäß einer ersten Ausführungsform der Erfindung.

Die Schraube 3 ist dabei von oben, d. h. durch eine erste Öffnung 23 axial durch das Abutment 2 hindurchgehend eingesetzt. Der Schraubenschaft 10 der Schraube 3 mit daran anschliessendem Gewindeschaft ragt dabei durch eine zweite Öffnung 24 im Abutment 2 heraus. Das Abutment 2 weist koronal beginnend einen Abutmentrand 9 auf, der in einen Konusbereich 22 übergeht. Daran anschliessend befindet sich ein erster Außenachtkant 21 der mit einer, nicht dargestellten, Suprakonstruktion oder Krone in Eingriff gebracht werden kann. Im zentralen Bereich weist das Abutment 2 koronal einen ersten Konusabschnitt 27 auf, und apikal einen zweiten Außenachtkant 28, der in einen ebenfalls konischen, apikalen Endbereich 16 des Abutments 2 übergeht, auf. Zum besseren Verständnis zeigt Fig. 1C schmatisch ein axial auf dem Abutment 2 aufgesetztes Dentalimplantat 1. Im Inneren des Abutments 2 befindet sich ein durch die erste Öffnung 23 eingesetzter Ring 4, der sich beginnend vom Abutmentrand 9 bis an eine umlaufende Nut 26 des Abutments 2 erstreckt. Der Ring 4 kann in bekannter Weise mit einem Innengewinde 11 zur Aufnahme von dentalen Suprakonstruktionen oder Kronen ausgebildet werden. Darüber hinaus kann der Ring 4 vorzugsweise mit einem Außengewinde 15 (nachstehend auch Ring-Außengewinde) ausgestattet werden, wobei er in dieser Form der Ring als "Ring mit Gewinde" bezeichnet wird und dessen Funktion nachstehen erläutert wird.

Der Ring 4 kann entweder in die erste Öffnung 23 formschlüssig eingepresst werden oder mittels Schweissen, z. B. mittels Laser- oder Ultraschallschweißen fixiert werden. Wenn der Ring 4 eingepresst wird, kann auch eine Struktur auf der Ringoberfläche 17 mit einem Gewinde aufgebracht werden, um so eine bessere Haftung des Rings 4 an einer angrenzenden Oberfläche 25 im Inneren des Abutments 2 zu erreichen. Die angrenzende Oberfläche 25 bildet dabei die Übergangsfläche zwischen Ring 4 und Abutment 2. Wenn der Ring 4 eingeschweißt wird, werden die Schweißstellen bevorzugt im Bereich einer Ringoberkante 40 und/oder einer Ringunterkante 41 angebracht. An der Ringunterkante 41 ist ein Hohlraum 5 vorhanden, der sich bildet, wenn der Schraubenkopf 6 der Schraube 3 nicht an dem Ring 4 anliegt, was ein gewisses Spiel beim Verschrauben der Schraube 3 mit dem Dentalimplantat 1 erlaubt. Die Schraube 3 wird durch eine dritte Öffnung 29 im Dentalimplantat 1 in dasselbe geführt, wobei eine Fase 8 am apikalen Ende der Schraube 3, die im Anschluß an das Gewinde 7 der Schraube 3 liegt, ein leichtes Einsetzen in ein im Dentalimplantat 1 befindlichen Gewinde (nicht dargestellt) ermöglicht. Dabei kann das Gewinde 7 der Schraube 3 mit den (nicht gezeigten) Gewinde des Dentalimplantats 1 verschraubt werden. Die Schraube 3 ist am koronalen Ende mit einer Eingriffkontur 31 ausgebildet, so dass wenn die Schraube 3 mittels eines in die Eingriffkontur 31 eingebrachten Schraubendrehers mit dem Dentalimplantat 1 verschraubt wird, liegt der den Schraubenkopf bildenden konische Bereich oberhalb des Schraubenschafts 10 formschlüssig an einer Kontaktfläche 12 des Abutments 2 an, die im Wesentlichen von einer Abutmentunterkante 13 begrenzt wird.

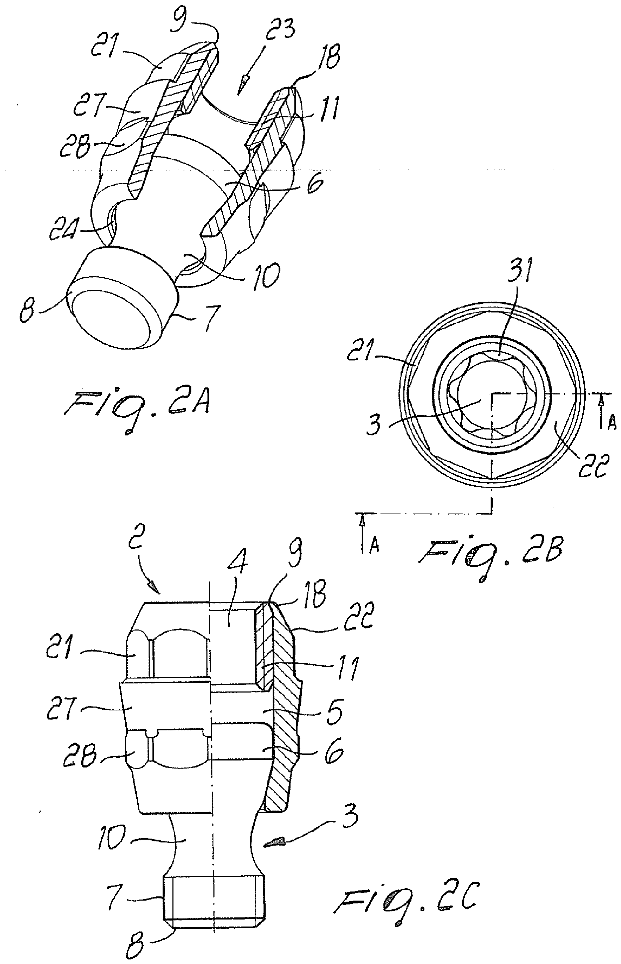

Figuren 2A-2C zeigen eine zweite Ausführungsform der Erfindung, wobei in Abweichung von der ersten Ausführungsform der Ring 4 im Inneren des Abutments 2 durch die erste Öffnung 23 eingepresst ist und sich beginnend vom Abutmentrand 9 bis an die umlaufende Nut 26 erstreckt. Der Abutmentrand 9 ist mittels einer Bördelung 18 im Übergangsbereich zwischen Konusbereich 22 und Abutmentrand 9 leicht zur Mittelachse des Abutments 2 geneigt. Anstelle der Bördelung 8, kann dieser Formschluss auch mittels Rollen ausgebildet werden.

Figuren 3A-3C zeigen eine dritte Ausführungsform der Erfindung, wobei in Abweichung von der ersten Ausführungsform der Ring 4 einen durchgehenden Vertikalschlitz 42 aufweist. Am Abutmentrand 9 im Bereich der ersten Öffnung 23 ist eine Anschrägung 22A ausgebildet, die von einem Abutment-Schnapper 22B begrenzt ist. Der Ring 4 wird zum Fixieren im Abutment 2 zuerst zusammengedrückt, so dass er etwa dengleichen, oder etwas geringeren, Durchmesser der ersten Öffnung 23 hat, um durch die Öffnung 23 hindurchzupassen. Die durch das Zusammendrücken aufgebaute Spannung im Ring 4 verursacht, dass nach Überschreiten des Abutment-Schnappers 22B in apikaler Richtung, der Ring 4 sich aufweiten kann und somit fest an der Innenfläche des Abutments 2 fixiert ist.

Figuren 4A-4C zeigen eine vierte Ausführungsform der Erfindung, wobei in Abweichung von der ersten Ausführungsform der Ring 4 mit zwei oder mehreren Dehnungsschlitzen 43 versehen ist. Der Ring 4 wird zum Fixieren im Abutment 2 eingepresst, wodurch der Ring 4 im Bereich der Dehnungssohlitze 43 nachgibt und sich bis zum Erreichen einem in der ersten Öffnung 23 befindlichen Abutment-Hinterstich 22C mit dem Ring-Schnapper 45 in den Abutment-Hinterstich 22C einschnappt.

Figuren 5A-5C zeigen eine fünfte Ausführungsform der Erfindung, wobei in Anlehnung an die erste Ausführungsform der Ring 4 als ununterbrochener Ring ausgebildet ist. Abweichend von der ersten Ausführangsform ist jedoch der koronale Abutmentbereich, der von dem Konusbereich 22 und dem ersten Außenachtkant 21 gebildet wird, mit mehreren symmetrisch angeordneten Dehnungsschlitzen 21.1, 21.2, 21.3, 21.4 versehen. Dadurch wird der koronalen Abutmentbereich in mehrere symmetrisch angeordnete Segmente 22.1,22.2, 22.3, 22.4 unterteilt. Der Ring 4 wird zum Fixieren im Abutment 2 eingepresst, wodurch die symmetrisch angeordneten Segmente 22.1, 22.2, 22.3, 22.4 sich aufweiten und den Ring 4 bis zu dem Punkt, wo der gesamte Ring 4 mit dem Ring-Hinterstich den Abutment-Schnapper 22B überwunden hat. Zu diesem Zeitpunkt verengen sich die vorher aufgeweiteten Segmente 22.1, 22.2, 22.3, 22.4 des Abutments 2 wieder und fixieren den Ring 4 im Abutment 2. Zur leichten Einführung des Rings 4 befindet sich zwischen Abutmentrand 9 und dem Abutment-Schnapper 22B, eine Anschrägung 22A. Es ist auch möglich, die Ausführungsform der Figuren 5A-5C mit einem Vertikalschlitz der Ausführungsform der Figuren 3A-3C oder Fig. 7 zu kombinieren,

Figuren 6A-6C zeigen eine sechste Ausführungsform der Erfindung, wobei in Anlehnung an die erste Ausführungsform der Ring 4 als ununterbrochener Ring 4 ausgebildet ist. Der Ring 4 weist dabei das Innengewinde 11 und ein Ring-Außengewinde 15 auf. Die erste Öffnung 23 des Abutments 2 weist beginnend an dem Abutmentrand 9 bis zu einer zentral im Inneren des Abutments 2 eingebrachten umlaufenden Nut 26 ein Abutment-Innengewinde 14 auf. Der Ring 4 wird dabei in das Abutment-Innengewinde 14 formschlüssig eingeschraubt, wobei die umlaufende Nut 26 ein Überdrehen des Rings 4 in apikaler Richtung verhindert. Vorteilhaft ist das Innengewinde 11 und das Ring-Außengewinde 15 gleichgerichtet.

Figur 7A zeigt einen Ring 4 in Vollausführung. In dieser Ausführung besteht der Ring 4 aus einem rohrförmigen Element, das an der Ringoberkante 40 einen Gewindeansatz für das Innengewinde 11 bildet. An der Ringunterkante 41 befindet sich der komplementäre Gewindeansatz des Innengewindes 11. Das Innengewinde 11 ist dabei auf der gesamten internen Oberfläche des Rings 4 ausgebildet. Die Ring-Außenfläche kann dabei glatt oder mit einer Struktur versehen sein, um das Lösen beim Schrauben zu verhindern. Die Struktur kann dabei als Rillen, Rändelung, Gewinde oder Mikrogewinde ausgebildet sein, wobei jedoch auch andere Rauhheitsstrukturen denkbar sind.

Figur 7B zeigt einen Ring 4 mit einem durchgehenden Vertikalschlitz 42, so dass er in diesem Bereich offen ist. Der Ring 4 ist ebenfalls ein rohrförmiges Element, wobei das Innengewinde 11 auf der gesamten internen Oberfläche ausgebildet ist.

Figur 7C zeigt einen Ring 4 in Vollausführung mit mehreren Dehnungsschlitzen 43, wobei die Dehnungschlitze 43 symmetrisch angeordnet sind und sich bis in den zentralen Bereich des Rings erstrecken.

Figur 7D zeigt einen Ring 4 in Vollausführung mit einem auf der gesamten Oberfläche ausgebildeten Innengewinde 11 und einem Ring-Außengewinde 15.

Wenn in irgendeinem der Ansprüche erwähnte technische Merkmale mit einem Bezugszeichen versehen sind, wurden diese Bezugszeichen lediglich eingeschlossen, um die Verständlichkeit der Ansprüche zu erhöhen. Entsprechend haben diese Bezugszeichen keine einschränkende Auswirkung auf den Schutzumfang eines jeden Elements, das exemplarisch durch solche Bezugszeichen bezeichnet wird.

| Bezugszeichenliste | |
|---|---|
| 1. | Dentalimplantat |
| 2. | Abutment |
| 3. | Schraube bzw. Basisschraube |
| 4. | Ring |
| 5. | Hohlraum |
| 6. | Schraubenkopf |
| 7. | Gewindeschaft |
| 8. | Fase |
| 9. | Abutmentrand |
| 10. | Schraubenschaft |
| 11. | Innengewinde des Rings |
| 12. | Kontaktfläche |
| 13. | Abutmentunterkante |
| 14. | Abutment-Innengewinde |
| 15. | Ring-Außengewinde |
| 16. | apikaler Endbereich |
| 17. | Ringoberfläche |
| 18. | Bördelung |
| 19. | |
| 20. | |
| 21. | 1. Außenachtkant |
| 21.1 | 1. Dehnungsschlitz |
| 21.2 | 2. Dehnungsschlitz |
| 21.3 | 3. Dehnungsschlitz |
| 21.4 | 4. Dehnungsschlitz |
| 22. | Konusbereich |
| 22A | Anschrägung |
| 22B | Abutment-Schnapper |
| 22C | Abutment-Hinterstich |
| 22.1 | 1. Segment |
| 22.2 | 2. Segment |
| 22.3 | 3. Segment |
| 22.4 | 4. Segment |
| 23. | 1. Öffnung |
| 24. | 2. Öffnung |
| 25. | angrenzende Oberfläche des Abutments |
| 26. | umlaufende Nut |
| 27. | 1. Konusabschnitt |
| 28. | 2. Außenachtkant |
| 29. | 3. Öffnung |
| 30. | |
| 31. | Eingriffskontur |
| 32. | 2. Konusabschnitt |
| 33. | |
| 34. | |
| 35. | |
| 36. | |
| 37. | |
| 38. | |
| 39. | |
| 40. | Ringoberkante |
| 41. | Ringunterkante |
| 42. | Vertikalschlitz |
| 43. | Dehnungsschlitze |
| 44. | |
| 45. | Ring-Schnapper |

## Patentansprüche

1. Verbindungsanordnung zwischen einem Dentalimplantat (1) und einem Abutment (2) umfassend ein mit einer ersten koronalen Öffnung (23) und einer zweiten apikalen Öffnung (24) bereitgestelltes Abutment (2), eine Schraube (3) und einen Ring (4), wobei der Ring (4) zum Festhalten einer im Abutment (2) eingesetzten Schraube (3) geeignet ist, wobei der Ring (4) in der ersten Öffnung (23) des Abutments (2) kraft-, form- oder stoffschlüssig an einer von der Schraube (3) koronal darüberliegenden und entfernten Position fixiert ist, so dass im Innenbereich des Abutments (2) ein Hohlraum (5) ausgebildet ist, der vor der Verbindung mit dem Implantat (1) ein Spiel der Schraube (3) zulässt und wobei der Ring (4) derart gefertigt ist, dass er von beiden Seiten in die erste Öffnung (23) des Abutments (2) eingesetzt werden kann.

2. Verbindungsanordnung gemäß Anspruch 1, **dadurch gekennzeichnet, dass** der Schraubenschaft (10) einen Bereich (22) aufweist, der konisch ausgebildet ist und an einer korrespondierenden konischen Innenfläche des Abutments (2) zum Anliegen kommt.

3. Verbindungsanordnung gemäß Anspruch 1 oder 2, **dadurch gekennzeichnet, dass** der Ring (4) formschlüssig in die erste Öffnung (23) des Abutments (2) eingepresst ist.

4. Verbindungsanordnung gemäß Anspruch 3, **dadurch gekennzeichnet, dass** das Abutment (2) einen koronal gelegenen Abutmentrand (9) hat, der umgeformt ist.

5. Verbindungsanordnung gemäß Anspruch 4, **dadurch gekennzeichnet, dass** die Umformung des Abutmentrands (9) durch Bördeln ausgeführt ist.

6. Verbindungsanordnung gemäß Anspruch 4, **dadurch gekennzeichnet, dass** die Umformung des Abutmentrands (9) durch Rollen ausgeführt ist.

7. Verbindungsanordnung gemäß Anspruch 4, **dadurch gekennzeichnet, dass** die Umformung des Abutmentrands (9) durch Bördeln und/oder Rollen ausgeführt ist.

8. Verbindungsanordnung gemäß Anspruch 1 oder 2, **dadurch gekennzeichnet, dass** der Ring (4) ein Außengewinde (15) aufweist, das in die erste Öffnung (23) des Abutments (2) formschlüssig eingeschraubt ist.

9. Verbindungsanordnung gemäß Anspruch 1 oder 2, **dadurch gekennzeichnet, dass** der Ring (4) in der ersten Öffnung (23) des Abutments (2) formschlüssig mittels einer Schnappverbindung befestigt ist.

10. Verbindungsanordnung gemäß Anspruch 9, **dadurch gekennzeichnet, dass** die Schnappverbindung durch einen Schnapper (22B) im Abutment (2) bereitgestellt ist.

11. Verbindungsanordnung gemäß Anspruch 9, **dadurch gekennzeichnet, dass** die Schnappverbindung durch einen Abutment-Hinterstich (22C) im Abutment (2) und einem Ring-Schnapper (45) im Ring (4) bereitgestellt ist.

12. Verbindungsanordnung gemäß Anspruch 3 oder 9, **dadurch gekennzeichnet, dass** der Ring (4) mit einem Vertikalschlitz (42) bereitgestellt ist.

13. Verbindungsanordnung gemäß Anspruch 3 oder 9, **dadurch gekennzeichnet, dass** der Ring (4) mit zwei oder mehreren Dehnungsschlitzen (43) bereitgestellt ist.

14. Verbindungsanordnung gemäß Anspruch 3 oder 9, **dadurch gekennzeichnet, dass** das Abutment (2) koronal mit einem oder mehreren Dehnungsschlitzen (21.1, 21.2, 21.3, 21.4) bereitgestellt ist.

15. Verbindungsanordnung gemäß Anspruch 1 oder 2, **dadurch gekennzeichnet, dass** der Ring (4) in der ersten Öffnung (23) des Abutments (2) stoffschlüssig verschweißt ist.

16. Verbindungsanordnung gemäß Anspruch 15, **dadurch gekennzeichnet, dass** der Ring (4) mit dem Abutment (2) mittels Laserschweißen oder Ultraschallschweißen verschweißt ist.

17. Verbindungsanordnung gemäß Anspruch 1 bis 7, **dadurch gekennzeichnet, dass** an eine Ringoberfläche (17) des Rings (4) und/oder die daran angrenzende Oberfläche (25) des Abutments (2) an ersten Öffnung (23) des Abutments (2) mit einer Struktur bereitgestellt ist.

18. Verbindungsanordnung gemäß Anspruch 17, **dadurch gekennzeichnet, dass** die Struktur als Rillen, Rändelung, Gewinde oder Mikrogewinde ausgebildet ist.

## Claims

1. Connecting assembly between a dental implant (1) and an abutment (2), comprising an abutment (2) provided with a first coronal opening (23) and a second apical opening (24), a screw (3) and a ring (4), the ring (4) being adapted for retaining a screw (3) inserted in the abutment (2), the ring (4) being fixed in the first opening (23) of the abutment (2) frictionally, by positive engagement or by material engagement in a position coronally above and remote from the screw (3) so that in the interior of the abutment (2), a cavity (5) is formed which allows a play of the screw (3) before connection to the implant (1), the ring (4) being fabricated such that it can be inserted in the first opening (23) of the abutment (2) from both sides.

2. Connecting assembly according to Claim 1, **characterized in that** the screw shaft (10) has a portion (22) which has a conical shape and rests against the corresponding conical inner surface of the abutment (2).

3. Connecting assembly according to Claim 1 or 2, **characterised in that** the ring (4) is pressed into the first opening (23) of the abutment (2) with positive engagement.

4. Connecting assembly according to Claim 3, **characterized in that** the abutment (2) has a coronal abutment edge (9) which is reshaped.

5. Connecting assembly according to Claim 4, **characterized in that** reshaping of the abutment edge (9) takes place by crimping.

6. Connecting assembly according to Claim 4, **characterized in that** reshaping of the abutment edge (9) takes place by rolling.

7. Connecting assembly according to Claim 4, **characterized in that** reshaping of the abutment edge (9) takes place by crimping and/or rolling.

8. Connecting assembly according to Claim 1 or 2, **characterized in that** the ring (4) has a male thread (15) which is screwed into the first opening (23) of the abutment (2) with positive engagement.

9. Connecting assembly according to Claim 1 or 2, **characterized in that** the ring (4) is fixed with positive engagement in the first opening (23) of the abutment (2) by means of a snap connection.

10. Connecting assembly according to Claim 9, **characterized in that** the snap connection is provided by a catcher (22B) in the abutment (2).

11. Connecting assembly according to Claim 9, **characterized in that** the snap connection is provided by an abutment recess (22C) in the abutment (2) and a ring catcher (45) in the ring (4).

12. Connecting assembly according to Claim 3 or 9, **characterized in that** the ring (4) is provided with a vertical slot (42).

13. Connecting assembly according to Claim 3 or 9, **characterized in that** the ring (4) is provided with two or more expansion slots (43).

14. Connecting assembly according to Claim 3 or 9, **characterized in that** the abutment (2) is coronally provided with one or more expansion slots (21.1, 21.2, 21.3, 21.4).

15. Connecting assembly according to Claim 1 or 2, **characterized in that** the ring (4) is welded into the first opening (23) of the abutment (2) with material engagement,

16. Connecting assembly according to Claim 15, **characterized in that** the ring (4) is welded together with the abutment (2) by laser welding or ultrasonic welding.

17. Connecting assembly according to Claims 1 through 7, **characterized in that** at a ring surface (17) of the ring (4) and/or the adjacent surface (25) of the abutment (2), a first opening (23) of the abutment (2) is provided with a structure,

18. Connecting assembly according to Claim 17, **characterized in that** the structure is formed as grooves, knurling, a thread or micro-thread.

## Revendications

1. Agencement d'assemblage entre un implant dentaire (1) et un pilier (2), comportant un pilier (2) pourvu d'une première ouverture coronaire (23) et d'une seconde ouverture apicale (24), une vis (3) et une bague (4), dans lequel la bague (4) est adaptée pour maintenir une vis (3) insérée dans le pilier (2), dans lequel la bague (4) est fixée dans la première ouverture (23) du pilier (2) à force, par complémentarité de formes ou par liaison de matière dans une position coronairement au-dessus de la vis (3) et éloignée de celle-ci, de telle sorte que dans la zone intérieure du pilier (2) est formée une cavité (5) qui permet un jeu de la vis (3) avant l'assemblage avec l'implant (1) et dans lequel la bague (4) est fabriquée de telle sorte qu'elle peut être insérée des deux côtés dans la première ouverture (23) du pilier (2).

2. Agencement d'assemblage selon la revendication 1, **caractérisé en ce que** la tige de vis (10) comporte une zone (22) formée de manière conique et vient en butée contre une surface intérieure conique correspondante du pilier (2).

3. Agencement d'assemblage selon la revendication 1 ou 2, **caractérisé en ce que** la bague (4) est pressée par complémentarité de formes dans la première ouverture (23) du pilier (2).

4. Agencement d'assemblage selon la revendication 3, **caractérisé en ce que** le pilier (2) a un rebord de pilier (9) positionné de manière coronaire, lequel rebord est mis en forme.

5. Agencement d'assemblage selon la revendication 4, **caractérisé en ce que** la mise en forme du rebord de pilier (9) est exécutée par sertissage.

6. Agencement d'assemblage selon la revendication 4, **caractérisé en ce que** la mise en forme du rebord de pilier (9) est exécutée par roulage.

7. Agencement d'assemblage selon la revendication 4, **caractérisé en ce que** la mise en forme du rebord de pilier (9) est exécutée par sertissage et/ou roulage.

8. Agencement d'assemblage selon la revendication 1 ou 2, **caractérisé en ce que** la bague (4) comporte un filetage extérieur (15) qui est vissé par complémentarité de formes dans la première ouverture (23) du pilier (2).

9. Agencement d'assemblage selon la revendication 1 ou 2, **caractérisé en ce que** la bague (4) est fixée par complémentarité de formes dans la première ouverture (23) du pilier (2) au moyen d'un encliquetage.

10. Agencement d'assemblage selon la revendication 9, **caractérisé en ce que** l'encliquetage est assuré par un cliquet (22B) dans le pilier (2).

11. Agencement d'assemblage selon la revendication 9, **caractérisé en ce que** l'encliquetage est assuré par une entaille de pilier (22C) dans le pilier (2) et un cliquet de bague (45) dans la bague (4).

12. Agencement d'assemblage selon la reverldication 3 ou 9, **caractérisé en ce que** la bague (4) est pourvue d'une fente verticale (42).

13. Agencement d'assemblage selon la revendication 3 ou 9, **caractérisé en ce que** la bague (4) est pourvue de deux ou plus de deux fentes d'extension (43).

14. Agencement d'assemblage selon la revendication 3 ou 9, **caractérisé en ce que** le pilier (2) est pourvu d'une ou plusieurs fentes d'extension coronaires (21.1, 21.2, 21.3, 21.4).

15. Agencement d'assemblage selon la revendication 1 ou 2, **caractérisé en ce que** la bague (4) est soudée par liaison de matière dans la première ouverture (23) du pilier (2).

16. Agencement d'assemblage selon la revendication 15, **caractérisé en ce que** la bague (4) est soudée au pilier (2) par un soudage laser ou un soudage par ultrasons.

17. Agencement d'assemblage selon les revendications 1 à 7, **caractérisé en ce qu'**une surface de bague (17) de la bague (4) et/ou la surface du pilier (2) adjacente à celle-ci (25) est pourvue d'une structure sur une première ouverture (23) du pilier (2).

18. Agencement de pilier selon la revendication 17, **caractérisé en ce que** la structure est configurée sous forme de nervures, d'un moletage, d'un filetage ou d'un microfiletage.
